Europäisches Patentamt

European Patent Office

Office européen des brevets

(19)

(11) Veröffentlichungsnummer : **0 429 479 B1**

(12) **EUROPÄISCHE PATENTSCHRIFT**

(45) Veröffentlichungstag der Patentschrift :
17.06.92 Patentblatt 92/25

(51) Int. Cl.$^5$ : **G01M 11/00**

(21) Anmeldenummer : 89908708.4

(22) Anmeldetag : 15.07.89

(86) Internationale Anmeldenummer :
PCT/EP89/00829

(87) Internationale Veröffentlichungsnummer :
WO 90/02324 08.03.90 Gazette 90/06

(54) **VERFHAREN UND VORRICHTUNG ZUR ÜBERWACHUNG VON LICHTENERGIE ÜBERTRAGENDEN OPTISCHEN FIBERN.**

(30) Priorität : 18.08.88 DE 3828107

(43) Veröffentlichungstag der Anmeldung :
05.06.91 Patentblatt 91/23

(45) Bekanntmachung des Hinweises auf die
Patenterteilung :
17.06.92 Patentblatt 92/25

(84) Benannte Vertragsstaaten :
AT DE FR GB IT

(56) Entgegenhaltungen :
DE-A- 2 620 357
US-A- 4 543 477

(73) Patentinhaber : **AESCULAP AG**
**Möhringer Strasse 125**
**W-7200 Tuttlingen (DE)**

(72) Erfinder : **THYZEL, Reinhardt**
**Obere Bergstrasse 3**
**W-8501 Heroldsberg (DE)**
Erfinder : **SCHRÖDER, Eckhard**
**Hans-Sachs-Str. 9**
**W-8501 Eckental (DE)**

(74) Vertreter : **Hoeger, Stellrecht & Partner**
**Uhlandstrasse 14 c**
**W-7000 Stuttgart 1 (DE)**

EP 0 429 479 B1

Jouve, 18, rue Saint-Denis, 75001 PARIS

**Beschreibung**

Die Erfindung bezieht sich auf ein Verfahren und eine Vorrichtung zur Überwachung von Lichtenergie übertragenden optischen Fibern mit den Merkmalen, die im Oberbegriff der Ansprüche 1 beziehungsweise 6 angegeben sind.

In vielen Fällen dienen optische Fibern zum Transport der Lichtenergie, so auch in medizinischen Geräten, letzteres insbesondere in Verbindung mit Lasergeräten, bei denen die Fiber die Lichtleitung zwischen Lasergerät und medizinischem Applikator übernimmt. Dies ist in der Ophtalmologie die Spaltlampe, in der Dermatologie das Fokussierhandstück und in den verschiedenen anderen Bereichen der inneren Medizin das Endoskop oder der Katheter usw.

All diese Geräte bedingen eine Überwachung der Lichtübertragung, wobei die Energiemessung zur Kontrolle und Regelung der Lichtdosis in der Regel immer vor der Fiber erfolgt. Damit werden Lichtverluste, die durch die Änderung der Fibereigenschaften eintreten können, zum Beispiel durch Fiberbruch nicht berücksichtigt. Eine Energiemessung direkt im medizinischen Applikator ist technisch oftmals nicht möglich oder zu schwierig, so befindet sich zum Beispiel bei der Endoskopieanwendung das Fiberende im Körper des Patienten.

Gerade im medizinischen Bereich besteht damit bei vielen Geräten die Unsicherheit, ob die vom Gerät angezeigte Energie beziehungsweise Leistung auch tatsächlich am Fiberausgang zur Verfügung steht. Die vielen Störfaktoren bedingt durch eine Verschmutzung oder Verbrennung des Fiberendes, aber auch mechanische Beschädigungen der Fiber zum Beispiel durch Fiberbruch oder am Fiberende sind letztlich nur dadurch zu erkennen, daß die medizinische Wirkung der Bestrahlung nachläßt oder ganz ausbleibt.

Als Abhilfe ist im Rahmen der US-A-4 543 477 ein Lasersystem beschrieben, bei welchem die von einem Laser erzeugte Strahlung mit der Strahlung verglichen wird, die aus einer Übertragungsfaser in Rückwärtsrichtung wieder austritt. Damit lassen sich Beschädigungen der Übertragungsfaser feststellen, es ist jedoch nicht möglich, den gesamten Übertragungsweg durch diese Überwachung genau daraufhin zu überwachen, an welcher Stelle möglicherweise Fehlübertragungen auftreten, insbesondere Fehljustierungen zwischen dem Laserstrahlengang einerseits und der Lichtleitfaser andererseits.

Aus der DE-A1-2 620 357 ist es weiterhin bekaut, zur Dämpfungsmessung in Lichtleitern Lichtimpulse durch den Lichtleiter zu senden und deren Laufzeit im Lichtleiter zu messen. Dabei können an der Eintrittsfläche reflektierte Strahlungsanteile störend sein.

Der Erfindung liegt die Aufgabe zugrunde, ein Verfahren und eine Vorrichtung der eingangs und in der US-A-4 543 477 beschriebenen Art dadurch zu verbessern, daß im gesamten Lichtleitsystem zwischen Laser und Lichtleitfaser-Austrittsfläche auftretende Übertragungsfehler zuverlässig erkaut werden können.

Diese Aufgabe wird bei einem Verfahren der eingangs beschriebenen Art erfindungsgemäß dadurch gelöst, daß man zusätzlich die an der Eintrittsfläche der Fiber reflektierte Lichtenergie mißt und ihre Intensität mit der einfallenden und der aus der Fiber zurückstrahlenden Lichtenergie vergleicht.

Bei einer Vorrichtung der eingangs beschriebenen Art wird diese Aufgabe erfindungsgemäß dadurch gelöst, daß ein erster Sensor für die aus der einfallenden Lichtenergie ausgelenkte Strahlung, ein zweiter Sensor für die an der Eintrittsfläche reflektierte Strahlung und ein dritter Sensor für die aus dem Inneren der Fiber zurückkommende Strahlung vorgesehen sind und daß die von den Sensoren erzeugten Signale einer die Signale vergleichenden Auswerteschaltung zugeführt werden.

Zur Durchführung des Verfahrens ist ein Strahlteiler in dem Lichtstrahl zwischen Lichtenergiequelle und Fibereintrittsfläche angeordnet und so mit Sensoren bestückt, daß drei Signale ausgespiegelt werden, die über optische Einrichtungen erfaßbar sind und in einer Meßeinrichtung miteinander verglichen werden.

Dem Strahlteiler werden somit drei Signale entnommen. Zunächst spiegelt der Strahlteiler einen geringen Teil des zur Fiber kommenden Lichtes aus. Dieses wird in einem Signal 1 erfaßt, wobei dieses Signal ein Maß für die ankommende Lichtleistung ist. Von den beiden Fiberenden werden Lichtreflexe zurückreflektiert, die ebenfalls dem Strahlteiler zugeführt werden und dort ausgespiegelt werden. So wird zunächst an der Eintrittsfläche der Fiber ein kleiner Teil des Lichtes reflektiert, in der Regel sind das etwa 4% des Lichtes, da Fiberenden im allgemeinen nicht entspiegelt sind. Dieses Licht gelangt über den Strahlteiler zu einem Sensor und wird als Signal 2 erfaßt. Die Strahlgeometrie dieses Reflexes entspricht der des ankommenden Lichtstrahles.

An der Fiberaustrittsfläche verläßt ein gleichgroßer Rückreflex die Fiber, jedoch mit einer veränderten Strahlgeometrie. Das Licht füllt einen Lichtkegel, der durch die numerische Apertur der Fiber gegeben ist. Somit gelangt ein Teil des Lichtes an dem Sensor für das Signal 2 vorbei und kau in einem weiteren Sensor zum Signal 3 erfaßt werden.

Diese drei Signale werden nun einer Auswerteeinrichtung zugeführt und miteinander verglichen. Aus dem Verhältnis dieser drei Signale zueinander lassen sich Aussagen über den optischen Zustand der Fiber erstellen:

1. Der Vergleich der Signale 1,2 und 3 zeigt, ob die Fibereinkopplung in Ordnung ist. Bei starker Dejustage fallen die Signale 2 und 3 ab.

2. Liegt ein Fiberbruch oder eine Beschädigung der Fiberaustrittsfläche vor, so steigt das Signal 3 stark gegenüber dem Signal 2 an.

3. Bei Eintauchen des Fiberendes in eine Flüssigkeit, zum Beispiel Spülflüssigkeit bei Endoskopieanwendungen sinkt das Signal 3 im Vergleich zum Signal 2 fast auf 0 ab.

Die Auswertung dieser Signale kann jederzeit erfolgen, zum Beispiel während der einzelnen Laserlichtapplikationen, sie kann aber auch kontinuierlich bei Vorhandensein einer Zielstrahlintensität tattfinden. Werden Laser mit unsichtbarem YAG-Laserlicht eingesetzt, so ist hier ein zweiter Laser zur Erzeugung eines Pilotlichtes vorzusehen, und dann kann die Fiberüberwachung mit Hilfe des Pilotlaserlichtes durchgeführt werden.

Diese Verfahren und die Vorrichtung dienen zur Überwachung der Fibereinkopplung und zum Erkennen des Zustandes der Fiber. Gleichermaßen kann der Einsatz aber auch zur Sicherung der Fiberfunktionen selbst herangezogen werden. So ist zum Beispiel bei der Anwendung mit gepulstem Nd:YAG-Laserlicht, bei denen in einer Spüllösung am Fiberende der optische Durchbruch erzeugt werden soll, durch eine kontinuierlich Kontrolle feststellbar, ob sich das Fiberende immer in der Flüssigkeit befindet. Hier empfiehlt sich eine Kopplung des Laserstrahls mit der Meßeinrichtung, dahingehend, daß beim Ausfall der Spülung der nächste Laserschuß unterbleibt, da ein nicht vom Spülmittel umspültes Fiberende beim nächsten Laserschuß unweigerlich der Zerstörung unterliegt.

Anhand einer Zeichnung sei die Erfindung näher erläutert: Ein Lichtstrahl 4 wird einer Fiber 7 zugeführt, wobei die Einkopplung durch eine Fibereinkopplungslinse 6 erfolgt. Der Lichtstrahl trifft damit auf die Fibereintrittsfläche 11 der Fiber 7 und wird durch die Fiber bis zu deren Austrittsfläche 12 übertragen. In diesen Strahlgang 4 ist ein Strahlteiler angeordnet, dessen Aufgabe darin besteht, das ankommende und reflektierte Licht auszuspiegeln. Zunächst wird von dem ankommenden Licht ein kleiner Teil ausgespiegelt und über einen Sensor 1 erfaßt, als Signal 1 abgeleitet. Dann wird das von der Fibereintrittsfläche reflektierte Licht 10 ebenfalls von dem Strahlteiler ausgespiegelt in einem Sensor 2 als Signal erfaßt. Das Signal 3 wird von dem von der Fiberaustrittsfläche 12 reflektierten Licht abgeleitet, in den dieses rückreflektierte Licht in Folge der veränderten Strahlengeometrie an dem Strahlgang des reflektierten Lichtes zum Signal 2 vorbeigeleitet, vom Strahlteiler erfaßt und in einer Linse 8 gebündelt einem Sensor 3 zugeleitet wird.

In einer Auswerteeinrichtung 13 werden dann diese drei Signale miteinander verglichen und wie in der Bescheibung erwähnt in Abhängigkeit von ihrer Größe zu den einzelnen Aussagen herangezogen.

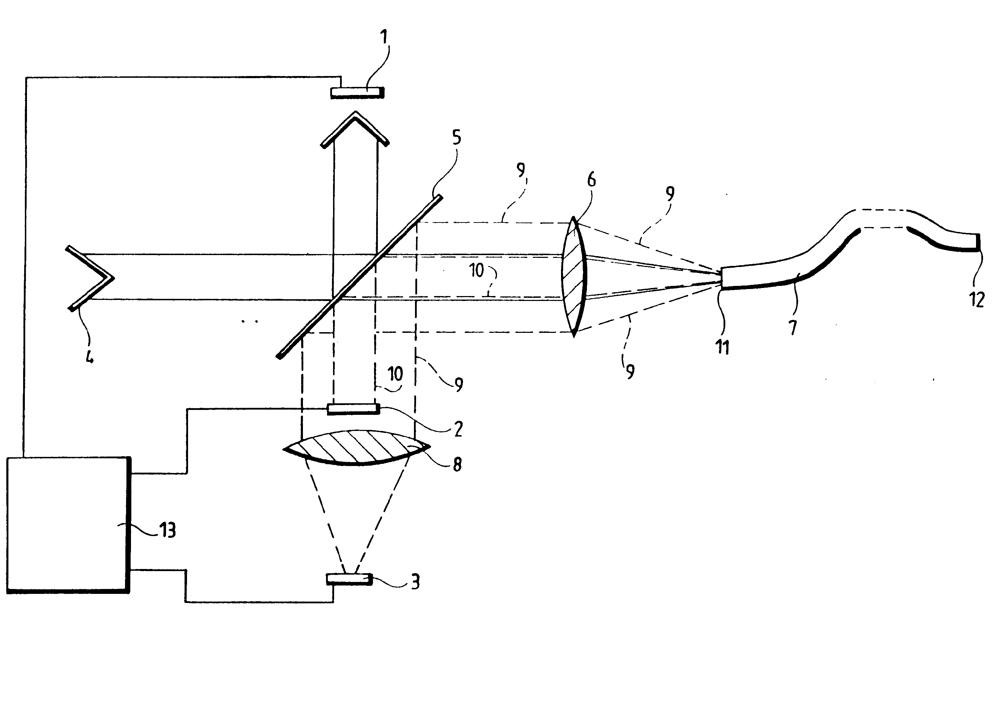

## Patentansprüche

1. Verfahren zur Überwachung von Lichtenergie übertragenden, optischen Fibern, insbesondere in Verbindung mit Laserstrahlgeräten, bei dem man Lichtenergie in die Fiber einstrahlt und die Intensität der aus der Fiber zurückstrahlenden Lichtenergie sowie der in die Fiber einfallenden Lichtenergie mißt und miteinander vergleicht,
**dadurch gekennzeichnet,**
daß man zusätzlich die an der Eintrittsfläche der Fiber reflektierte Lichtenergie mißt und ihre Intensität mit der einfallenden und der aus der Fiber zurückstrahlenden Lichtenergie vergleicht.

2. Verfahren nach Anspruch 1, dadurch gekennzeichnet, daß man die Strahlung mißt, die von einem Behandlungsstrahl erzeugt wird.

3. Verfahren nach Anspruch 1, dadurch gekennzeichnet, daß man die Strahlung mißt, die von einem Pilotlasertrahl erzeugt wird.

4. Verfahren nach einem der voranstehenden Ansprüche, dadurch gekennzeichnet, daß man aus der in die Fiber einfallenden und aus den an der Eintrittsfläche und in der Fiber reflektierten Strahlungen durch einen teildurchlässigen Spiegel im Bereich zwischen einer Lichtquelle und der Eintrittsfläche der Fiber Meßstrahlung auslenkt.

5. Verfahren nach Anspruch 4, dadurch gekennzeichnet, daß man in der vom Spiegel ausgelenkten, von der Fiber zurückkommenden Strahlung im zentralen Bereich und in einem diesen umgebenden Ringbereich die Lichtintensitäten getrennt mißt und die Strahlungsintensitäten als Maß für die Rückstrahlung an der Eintrittsfläche bzw. aus dem Innern der Fiber verwendet.

6. Vorrichtung zur Überwachung von Lichtenergie übertragenden, optischen Fasern, insbesondere in Verbindung mit Laserstrahlgeräten, mit einer Lichtenergie durch ein Eintrittsfläche in eine optische Fiber einstrahlenden Lichtquelle, mit einem zwischen Lichtquelle und Eintrittsfläche angeordneten, teildurchlässigen Spiegel und mit Sensoren zur Bestimmung der Intensität der von dem Spiegel aus der Hauptstrahlrichtung ausgelenkten Strahlungsintensität, dadurch gekennzeichnet, daß ein erster Sensor (1) für die aus der einfallenden Lichtenergie ausgelenkte Strahlung, ein zweiter Sensor (2) für die an der Eintrittsfläche (11) reflektierte Strahlung

3

und ein dritter Sensor (3) für die aus dem Innern der Fiber (7) zurückkommende Strahlung vorgesehen sind, und daß die von den Sensoren (1, 2, 3) erzeugten Signale einer die Signale vergleichenden Auswerteschaltung zugeführt werden.

7. Vorrichtung nach Anspruch 6, dadurch gekennzeichnet, daß auf den Sensor (2) für die an der Eintrittsfläche (11) reflektierte Strahlung die im zentralen Bereich der von dem Spiegel (5) ausgelenkten Strahlung befindliche Strahlung auftrifft, auf den Sensor (3) für die aus dem Innern der Fiber (7) zurückkommende Strahlung die diesen zentralen Bereich umgebende Strahlung.

## Claims

1. A method for monitoring optical fibres transmitting light energy, particularly in connection with laser beam devices, in which light energy is irradiated into the fibre and the intensities of the light energy reflected from the fibre and of the light energy incident into the fibre are measured and compared with one another, characterised
in that the light energy reflected at the entry surface of the fibre is additionally measured and its intensity is compared with the incident and reflected light energy from the fibre.

2. A method according to claim 1, characterised in that the radiation generated by a treatment beam is measured.

3. A method according to claim 1, characterised in that the radiation generated by a pilot laser beam is measured.

4. A method according to one of the preceding claims, characterised in that measuring radiation is deflected from the radiations incident into the fibre and from the radiations reflected at the entry surface and in the fibre by means of a semireflecting mirror in the region between a light source and the entry surface of the fibre.

5. A method according to claim 4, characterised in that the light intensities in the radiation deflected by the mirror and returning from the fibre in the central region and in a circular region surrounding this central region are measured separately, and the radiation intensities are used as a measurement for the reflection at the entry surface or from the interior of the fibre.

6. A device for monitoring optical fibres transmitting light energy, particularly in connection with laser beam devices, comprising a light source irradiating light energy through an entry surface into an optical fibre, a semireflecting mirror disposed between the light source and the entry surface, and sensors to determine the intensity of the radiation intensity deflected by the mirror from the main beam direction, characterised in that a first sensor (1) for the radiation deflected from the incident light energy, a second sensor (2) for the radiation reflected at the entry surface (11) and a third sensor (3) for the radiation returning from the interior of the fibre (7) are provided, and in that the signals generated by the sensors (1, 2, 3) are supplied to an evaluating circuit comparing the signals.

7. A device according to claim 6, characterised in that the radiation present in the central region of the radiation deflected by the mirror (5) impinges on the sensor (2) for the radiation reflected at the entry surface (11), and the radiation surrounding this central region impinges on the sensor (3) for the radiation returning from the interior of the fibre (7).

## Revendications

1. Procédé pour contrôler des fibres optiques transmettant de l'énergie lumineuse, en particulier en liaison avec des appareils à faisceau laser, procédé dans lequel on envoie de l'énergie lumineuse dans la fibre et on mesure, et on compare l'une avec l'autre, les intensités de l'énergie lumineuse rayonnée en retour hors de la fibre et l'énergie lumineuse envoyée dans la fibre,
procédé caractérisé
par le fait que l'on mesure en outre l'énergie lumineuse réfléchie sur la surface d'entrée de la fibre et que l'on compare son intensité avec l'énergie lumineuse envoyée dans la fibre et l'énergie lumineuse rayonnée en retour hors de la fibre.

2. Procédé selon la revendication 1, caractérisé par le fait que l'on mesure le rayonnement qui est produit par un faisceau de traitement.

3. Procédé selon la revendication 1, caractérisé par le fait que l'on mesure le rayonnement qui est produit par un faisceau laser pilote.

4. Procédé selon l'une des revendications précédentes, caractérisé par le fait que, des rayonnements qui entrent dans la fibre et de ceux qui sont réfléchis sur la surface d'entrée et dans la fibre, on fait dériver le faisceau de mesure au moyen d'un miroir partiellement transparent disposé dans la zone existant entre une source lumineuse et la surface d'entrée de la fibre.

5. Procédé selon la revendication 4, caractérisé par le fait que, dans le faisceau dérivé par le miroir et provenant, en retour, de la fibre, on mesure séparément les intensités lumineuses dans la zone centrale et dans une zone annulaire entourant celle-ci, et que l'on emploie ces intensités du rayonnement comme mesure pour le rayonnement renvoyé par la surface d'entrée de la fibre et celui provenant de l'intérieur de la fibre.

6. Dispositif pour contrôler des fibres optiques transmettant de l'énergie lumineuse, en particulier en liaison avec des appareils à faisceau laser, comportant une source lumineuse qui envoie de l'énergie lumineuse dans une fibre optique par une surface d'entrée, comportant aussi un miroir partiellement transparent, disposé entre la source lumineuse et la surface d'entrée et comportant aussi des détecteurs pour déterminer l'intensité du rayonnement dérivé, par le miroir, hors de la direction du faisceau principal, dispositif caractérisé par le fait que sont prévus un premier détecteur (1) pour le rayonnement dérivé à partir de l'énergie lumineuse entrant dans la fibre, un second détecteur (2) pour le rayonnement réfléchi sur la surface d'entrée (11) et un troisième détecteur (3) pour le rayonnement provenant, en retour, de l'intérieur de la fibre (7), et par le fait que les signaux produits par les détecteurs (1, 2, 3) sont envoyés à un circuit de traitement qui compare les signaux.

7. Dispositif selon la revendication 6, caractérisé par le fait qu'au titre du rayonnement réfléchi sur la surface d'entrée (11), c'est le rayonnement qui se trouve dans la zone centrale du faisceau dérivé par le miroir (5) qui tombe sur le détecteur (2), et qu'au titre du rayonnement provenant, en retour, de l'intérieur de la fibre (7), c'est le rayonnement entourant cette zone centrale qui tombe sur le détecteur (3).